# FASCICULE DE BREVET EUROPEEN

(11) **EP 2 631 123 B1**
(45) Date de publication et mention de la délivrance du brevet: **10.09.2014**
(21) Numéro de dépôt: 13154480.1
(22) Date de dépôt: 07.02.2013
(51) Int. Cl.: B60R 13/08

(54) **Ecran de protection acoustique destiné à être disposé en regard d un moteur de véhicule automobile**
Lärmschutzschirm zur Anordnung gegenüber dem Motor eines kraftfahrzeug
Noise screen to be placed in regard of the engine of an automotive vehicle.

(30) Priorité: 23.02.2012 FR 1251633
(43) Date de publication de la demande: 28.08.2013
(73) Titulaire: CENTRE D'ETUDE ET DE RECHERCHE POUR L'AUTOMOBILE (CERA), 51100 Reims (FR)
(72) Inventeur: Ribes, Stéphane, 51140 Romain (FR); Waxin, Laurent, 02130 Dravegny (FR); Capron, Christophe, 51490 Epoye (FR)
(74) Mandataire: Sayettat, Julien Christian

(56) Documents cités:
- EP-A1- 1 914 406
- JP-A- 58 177 781
- JP-A- 2007 255 189

## Description

L'invention concerne un écran de protection acoustique destiné à être disposé en regard d'un moteur de véhicule automobile.

II est connu, notamment du document JP 2007 255189 A, de réaliser un écran de protection acoustique destiné à être disposé en regard d'un moteur de véhicule automobile, ledit écran comprenant disposés successivement l'un sous l'autre :
- une coque structurelle,
- une couche poreuse d'absorption,
- une feuille de protection poreuse,
ledit écran présentant les caractéristiques suivantes :
- la face de ladite coque tournée vers ladite couche est pourvue d'un premier jeu de saillies hautes,
- ladite couche comprend une pluralité d'ouvertures à travers lesquelles passent lesdites saillies hautes, de manière à être saillantes de ladite couche depuis sa face opposée à celle tournée vers ladite coque,
- ladite feuille est posée sur lesdites saillies, de manière à être écartée de ladite couche.

La feuille poreuse peut assurer une protection de la couche poreuse vis à vis des fluides, et éventuellement une protection thermique de la coque quand ladite feuille est réflectrice, étant notamment à base d'aluminium.

En outre, la porosité de la feuille permet aux ondes sonores de pénétrer au sein de la couche poreuse pour y être absorbées.

Le fait que la feuille poreuse soit posée sur les saillies, de manière à être écartée de la couche poreuse, permet de mettre en oeuvre une lame d'air contribuant à la protection acoustique.

La mise en oeuvre d'une telle lame d'air permet d'alléger la couche poreuse pour une protection acoustique équivalente.

Cependant, l'écran présente une masse qu'il convient d'alléger autant que possible pour optimiser celle du véhicule.

L'invention a pour objet de réaliser un écran allégé de façon optimale qui conserve des propriétés d'absorption acoustique satisfaisantes.

A cet effet, l'invention propose un écran de protection acoustique destiné à être disposé en regard d'un moteur de véhicule automobile, ledit écran comprenant, disposés successivement l'un sous l'autre :
- une coque structurelle,
- une couche poreuse d'absorption,
- une feuille de protection poreuse,
ledit écran présentant en outre les caractéristiques suivantes :
- la face de ladite coque tournée vers ladite couche est pourvue d'un premier jeu de saillies hautes,
- ladite couche comprend une pluralité d'ouvertures à travers lesquelles passent lesdites saillies hautes, de manière à être saillantes de ladite couche depuis sa face opposée à celle tournée vers ladite coque,
- ladite feuille est posée sur lesdites saillies, de manière à être écartée de ladite couche,
la face de ladite coque tournée vers ladite couche étant pourvue en outre d'un deuxième jeu de saillies basses, ladite couche étant posée sur lesdites saillies, de manière à être écartée de ladite face.

Avec un tel agencement, on optimise l'allègement de l'écran, avec création de deux couches d'air disposées respectivement de part et d'autre de la couche poreuse, lesdites couches d'air participant à l'absorption acoustique.

En outre, les couches d'air assurent une protection de la coque à l'égard de la chaleur émise par le moteur du véhicule.

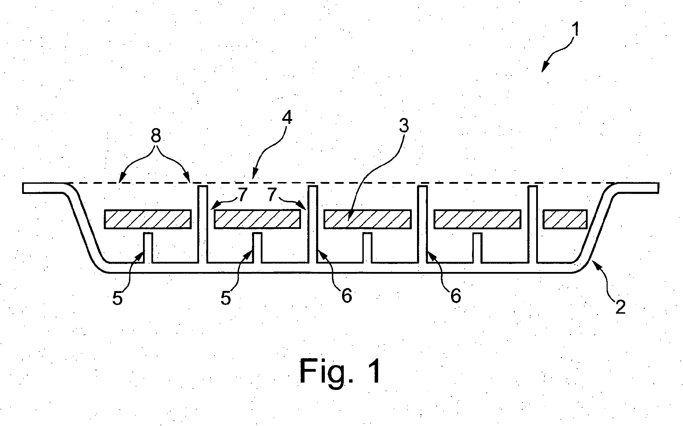

D'autres particularités et avantages de l'invention apparaîtront dans la description qui suit, faite en référence à la figure jointe qui est une représentation schématique en coupe d'un écran selon une réalisation.

En référence à la figure, on décrit un écran 1 de protection acoustique destiné à être disposé en regard d'un moteur de véhicule automobile, ledit écran comprenant, disposés successivement l'un sous l'autre :
- une coque 2 structurelle,
- une couche 3 poreuse d'absorption,
- une feuille 4 de protection poreuse,
ledit écran présentant en outre les caractéristiques suivantes :
- la face de ladite coque tournée vers ladite couche est pourvue d'un premier jeu de saillies hautes 6,
- ladite couche comprend une pluralité d'ouvertures 7 à travers lesquelles passent lesdites saillies hautes, de manière à être saillantes de ladite couche depuis sa face opposée à celle tournée vers ladite coque,
- ladite feuille est posée sur lesdites saillies, de manière à être écartée de ladite couche, une couche d'air étant formée entre ladite couche poreuse et ladite feuille.

Selon la réalisation représentée, la face de la coque 2 tournée vers la couche 3 poreuse est pourvue en outre d'un deuxième jeu de saillies basses 5, ladite couche étant posée sur lesdites saillies, de manière à être écartée de ladite face, une autre couche d'air étant formée entre ladite couche poreuse et ladite coque.

On dispose ainsi d'un écran 1 avec deux couches d'air disposées de part et d'autre de la couche 3 poreuse, ce qui améliore les propriétés d'absorption acoustique dudit écran.

Selon une réalisation, des saillies 5,6 sont sous forme de picots.

Selon une autre réalisation, des saillies 5,6 sont sous forme de nervures.

Selon une réalisation, la couche 3 poreuse est à base de feutre, par exemple de fibres de verre.

Selon une réalisation, la couche 3 poreuse est à base de mousse, par exemple de type polypropylène Alvéo ® micro-perforée.

En variante, la mousse est à base de polyuréthanne de densité notamment comprise entre 8 et 35 g/l.

Selon une réalisation, la feuille 4 est métallique, ladite feuille comprenant une pluralité de micro-perforations 8, notamment de 25 à 60 perforations par cm², leur diamètre étant notamment compris entre 0,12 et 0,25 mm, l'épaisseur de ladite feuille étant notamment comprise entre 50 et 130 microns, notamment de l'ordre de 100 microns.

L'utilisation d'une feuille 4 métallique permet de réfléchir une partie de la chaleur issue du moteur du véhicule, et de protéger par conséquent la coque 2 de la chaleur.

Les perforations 8 sont agencées pour permettre aux ondes sonores de pénétrer au delà de la feuille 4 pour être absorbées dans la couche 3 poreuse.

En outre, la feuille 4 métallique permet d'assurer une protection de la couche 3 poreuse vis à vis des fluides, en raison de la faible dimension des perforations 8.

En variante, la feuille 4 est en matériau thermoplastique, ladite feuille comprenant une pluralité de telles micro-perforations 8.

Par exemple le film est à base de polyamide, polyester, polyéther-éther-cétone, ou tout autre matériau plastique à point de fusion élevé.

En autre variante, la feuille 4 est en matériau poreux.

Selon une réalisation, la périphérie de la feuille 4 est associée à la coque 2.

On réalise ainsi une amélioration des performances d'absorption acoustique de l'écran 1.

En outre, on empêche une pénétration des fluides dans la couche 3 poreuse par sa tranche.

L'association entre la périphérie de la feuille 4 et la coque 2 peut être faite par tous moyens connus : rivetage, soudure, écrasement à chaud, collage,...

## Revendications

1. Ecran (1) de protection acoustique destiné à être disposé en regard d'un moteur de véhicule automobile, ledit écran comprenant, disposés successivement l'un sous l'autre :
• une coque (2) structurelle,
• une couche (3) poreuse d'absorption,
• une feuille (4) de protection poreuse,
ledit écran présentant les caractéristiques suivantes :
• la face de ladite coque tournée vers ladite couche est pourvue d'un premier jeu de saillies hautes (6),
• ladite couche comprend une pluralité d'ouvertures (7) à travers lesquelles passent lesdites saillies hautes, de manière à être saillantes de ladite couche depuis sa face opposée à celle tournée vers ladite coque,
• ladite feuille est posée sur lesdites saillies, de manière à être écartée de ladite couche,
ledit écran étant **caractérisé en ce que** la face de ladite coque tournée vers ladite couche est pourvue en outre d'un deuxième jeu de saillies basses (5), ladite couche étant posée sur lesdites saillies, de manière à être écartée de ladite face.

2. Ecran selon la revendication 1, **caractérisé en ce que** des saillies (5,6) sont sous forme de picots.

3. Ecran selon la revendication 1, **caractérisé en ce que** des saillies (5,6) sont sous forme de nervures.

4. Ecran selon l'une quelconque des revendications 1 à 3, **caractérisé en ce que** la couche (3) poreuse est à base de feutre.

5. Ecran selon l'une quelconque des revendications 1 à 3, **caractérisé en ce que** la couche (3) poreuse est à base de mousse.

6. Ecran selon l'une quelconque des revendications 1 à 5, **caractérisé en ce que** la feuille (4) comprend une pluralité de micro-perforations (8), notamment de 25 à 60 perforations par cm², leur diamètre étant notamment compris entre 0,12 et 0,25 mm, l'épaisseur de ladite feuille étant notamment comprise entre 50 et 130 microns, notamment de l'ordre de 100 microns.

7. Ecran selon la revendication 6, **caractérisé en ce que** la feuille (4) est en matériau thermoplastique ou métallique.

8. Ecran selon l'une quelconque des revendications 1 à 5, **caractérisé en ce que** la feuille (4) est en matériau poreux.

9. Ecran selon l'une quelconque des revendications 1 à 8, **caractérisé en ce que** la périphérie de la feuille (4) est associée à la coque (2).

## Patentansprüche

1. Akustischer Schutzschirm (1), der dazu ausgelegt ist, gegenüber einem Motor eines Kraftfahrzeugs angeordnet zu sein, wobei der Schirm, aufeinander folgend untereinander angeordnet, Folgendes umfasst:
- eine strukturelle Schale (2),
- eine poröse Absorptionsschicht (3),
- ein poröses Schutzblatt (4),
wobei der Schirm die folgenden Eigenschaften aufweist:
- die Seite der Schale, die gegen die Schicht gedreht ist, ist mit einem ersten Satz von hohen Vorsprüngen (6) ausgestattet,
- die Schicht eine Vielzahl von Öffnungen (7) umfasst, durch die die hohen Vorsprünge verlaufen, so dass sie aus der Schicht von ihrer Seite, die derjenigen, die gegen die Schale gedreht ist, hervorspringen,
- das Blatt auf die Vorsprünge aufgelegt ist, so dass es von der Schicht beabstandet ist,
wobei der Schirm **dadurch gekennzeichnet ist, dass** die Seite der Schale, die gegen die Schicht gedreht ist, außerdem mit einem zweiten Satz von niedrigen Vorsprüngen (5) ausgestattet ist, wobei die Schicht auf die Vorsprünge gesetzt ist, so dass sie von der Seite beabstandet ist,

2. Schirm nach Anspruch 1, **dadurch gekennzeichnet, dass** Vorsprünge (5, 6) die Form von Stacheln aufweisen.

3. Schirm nach Anspruch 1, **dadurch gekennzeichnet, dass** Vorsprünge (5, 6) die Form von Rippen aufweisen.

4. Schirm nach einem der Ansprüche 1 bis 3, **dadurch gekennzeichnet, dass** die poröse Schicht (3) auf Filz basiert.

5. Schirm nach einem der Ansprüche 1 bis 3, **dadurch gekennzeichnet, dass** die poröse Schicht (3) auf Schaum basiert.

6. Schirm nach einem der Ansprüche 1 bis 5, **dadurch gekennzeichnet, dass** das Blatt (4) eine Vielzahl von Mikroperforationen (8) umfasst, insbesondere von 25 bis 60 Perforationen pro cm², wobei ihr Durchmesser insbesondere zwischen 0,12 und 0,25 mm liegt, wobei die Dicke des Blatts insbesondere zwischen 50 und 130 Mikrometer liegt, insbesondere im Bereich von 100 Mikrometer.

7. Schirm nach Anspruch 6, **dadurch gekennzeichnet, dass** das Blatt (4) aus thermoplastischem oder metallischem Material ist,

8. Schirm nach einem der Ansprüche 1 bis 5, **dadurch gekennzeichnet, dass** das Blatt (4) aus porösem Material ist.

9. Schirm nach einem der Ansprüche 1 bis 8, **dadurch gekennzeichnet, dass** der Umfang des Blatts (4) mit der Schale (2) assoziiert ist.

## Claims

1. Noise screen (1) to be placed in regard of the engine of an automotive vehicle, said screen comprising, arranged successively one under the other:
- a structural shell (2);
- a porous absorption layer (3)
- a porous absorption sheet (4),
said screen having the following characteristics:
- the face of said shell turned towards said layer is provided with a first set of high projections (6),
- said layer comprises a plurality of openings (7) through which pass said high projections, in such a way as to be projecting from said layer from its face opposite that turned towards said shell,
- said sheet is positioned on said projections, in such a way as to be separated from said layer,
said screen **characterised in that** the face of said shell turned towards said layer is further provided with a second set of projections (5), said layer being positioned on said projections, in such a way as to be separated from said face.

2. Screen according to claim 1, **characterised in that** projections (5, 6) are in the form of pins.

3. Screen according to claim 1, **characterised in that** projections (5, 6) are in the form of ribs.

4. Screen according to any of claims 1 to 3, **characterised in that** the porous layer (3) has a felt base.

5. Screen according to any of claims 1 to 3, **characterised in that** the porous layer (3) has a foam layer.

6. Screen according to any of claims 1 to 5, **characterised in that** the sheet (4) comprises a plurality of micro-perforations (8), in particular from 25 to 60 perforations per cm². Their diameter is in particular between 0.12 and 0.25 mm, with the thickness of said sheet being in particular between 50 and 130 microns, in particular of a magnitude of 100 microns.

7. Screen according to claim 6, **characterised in that** the sheet (4) is made from a thermoplastic or metal material.

8. Screen according to any of claims 1 to 5, **characterised in that** the sheet (4) is made of porous material.

9. Screen according to any of claims 1 to 8, **characterised in that** the periphery of the sheet (4) is associated with the shell (2).
